**Europäisches Patentamt**

**European Patent Office**

**Office européen des brevets**

(11) Publication number: **0 096 661**
**B1**

(12) **EUROPEAN PATENT SPECIFICATION**

(45) Date of publication of patent specification: **15.10.86**

(21) Application number: **83830083.8**

(22) Date of filing: **22.04.83**

(51) Int. Cl.⁴: **B 60 C 7/28**

(54) **Inextensible shaped ring for reinforcing inserts of superelastic solid tire beads.**

(30) Priority: **07.06.82 IT 2172582**

(43) Date of publication of application:
**21.12.83 Bulletin 83/51**

(45) Publication of the grant of the patent:
**15.10.86 Bulletin 86/42**

(84) Designated Contracting States:
**AT BE DE FR GB**

(56) References cited:
**DE-B-1 027 542**
**DE-C- 127 656**
**FR-A- 398 230**
**GB-A- 21 891**
**GB-A-1 459 998**

(73) Proprietor: **Sapori, Carlo**
**Via Costantino Baroni, 22**
**I-20142 Milan (IT)**

(72) Inventor: **Sapori, Carlo**
**Via Costantino Baroni, 22**
**I-20142 Milan (IT)**

(74) Representative: **Calvani, Domenico**
**UFFICIO BREVETTI ING. CALVANI, SALVI &**
**VERONELLI 4, Piazza Duca d'Aosta**
**I-20124 Milan (IT)**

Courier Press, Leamington Spa, England.

## Description

The present invention relates generally to reinforcing inserts for superelastic solid tire beads or the like and particularly to a shaped ring forming the above mentioned reinforcing insert and capable of imparting to the superelastic solid tire bead or the like a very good dimensional stability.

It is known that the superelastic or elastic solid tires have a characteristic structure formed of an inner layer or bead reinforced or not by inserts and intended to be mounted on the vehicle rim, an intermediate layer of elastic rubber and an outer layer forming the tire tread. The latter layer is formed of hard rubber, exhibiting high chemical and physical characteristics, particularly as far as the wear and abrasion resistance is concerned, whereas the intermediate layer is formed of a soft rubber exhibiting a high elastic hysteresis and the inner layer is formed of hard rubber since it must exhibit high mechanical characteristics as to the stiffness and the strength, being intended to form the tire bead which is to be housed in a seat provided in the vehicle rim. Furthermore, the solid tire bead is designed in such a way that a replacement of the conventional tires with the above mentioned solid tires can occur, without the necessity of changing the tire rim, thereby permitting both the tires to be interchanged.

These solid tires offer great advantage with respect to the conventional tires, particularly when employed in industrial vehicles for internal uses, such as load elevators and carriers even subjected to very high weights. In fact, they have a very high safety against damaging, as well as a long life even under unfavourable conditions of use. Further they have a high wear resistance, a tough tread and great strength in adverse conditions of use. To this it is to add the same running comfort as the conventional tires, an easy assemblability on the rims with a rather favourable mechanical fit thereon.

However, besides these advantages, this kind of tire presents some drawbacks. One of more relevant ones is given by the fact that, when the solid tire is mounted on and mechanically anchored to the rim, a small backlash between rim and tire bead after some time occurs which is due to the settling of the tire bead within the rim seat by permanent deformations thereof caused by the static, dynamic and shear stresses being exerted on the wheel tire, which backlash can ultimately lead to a slip between solid tire and rim with the result that, i.a. a failing to stop of the vehicle upon braking may occur.

This drawback occurs even with solid tires provided with reinforcing inserts, e.g. round irons, metal strands or straps, since these inserts are not capable to prevent the localized compressions that the rim imparts to the solid tire, particularly the tire bead, or at the regions between a pair of inserts.

Another drawback presented by the superelastic or elastic solid tires provided with a reinforcing insert on the tire bead, which reinforcing insert, as already said, is generally in the form of round irons, metal strands and straps or else in another suitable material, is that the tire bead, due to the above static, dynamic and shear stresses and the material compressions between the rim and the bead side, can both radially and peripherically split or crack with resulting rupture of the tire which then must be changed.

GB—A—1 459 998 (corresponding to the preamble of claim 1) discloses a vehicle wheel and tire assembly wherein the tire comprises an annular body of elastomeric material having an annular recess open to the radially inner peripheral surface of the body and a pair of identical angled rings united with the body and disposed one on each side of the annular recess and interconnected only by the material of the body when the tire is off the wheel, each of said rings having an axially extending portion and a radially extending portion intended to be embedded in said body.

Also this tire assembly is affected by the above discussed drawbacks.

Therefore, it is the object of the present invention to obviate the above mentioned and other drawbacks by providing a reinforcing ring for superelastic or elastic solid tire beads which increases the stability thereof in the rim and prevents the adverse compression concentration in the tire region due to the dynamic and shear loads.

It is another object of the present invention to provide a reinforcing ring for superelastic or elastic solid tire beads which avoids the deformations occurring between tire and rim, particularly on the tire bead sides.

These and other objects of the present invention are attained by an inextensible shaped ring for reinforcing inserts of superelastic solid tire or the like, mounted on a rim, said ring being formed of at least one circular element provided on each of its outer edges with a radially projecting flange, said inextensible ring being characterized in that it is embodied in said bead and in that said flange has on outwardly arcuated shape mating the rim shape on the sides in order to be anchored thereto by means of the superelastic solid tire to avoid a possible slip between tire and rim during the use.

These and other features of the present invention will be more apparent from the following description taken in connection with the accompanying drawings, description and drawings being given by way of example only and therefore not intended in a limiting sense of the scope of the invention.

In the drawings:

Fig. 1 is a cross-sectional view of an embodiment of the tire bead reinforcing ring inserted in a superelastic solid tire shown in dashed lines;

Fig. 2 is a view similar to Fig. 1, showing another embodiment of the tire bead reinforcing ring, and

Fig. 3 is a partial cross-sectional view of the superelastic solid tire with the reinforcing ring embodied therein, the tire being mounted on a conventional V-shaped rim.

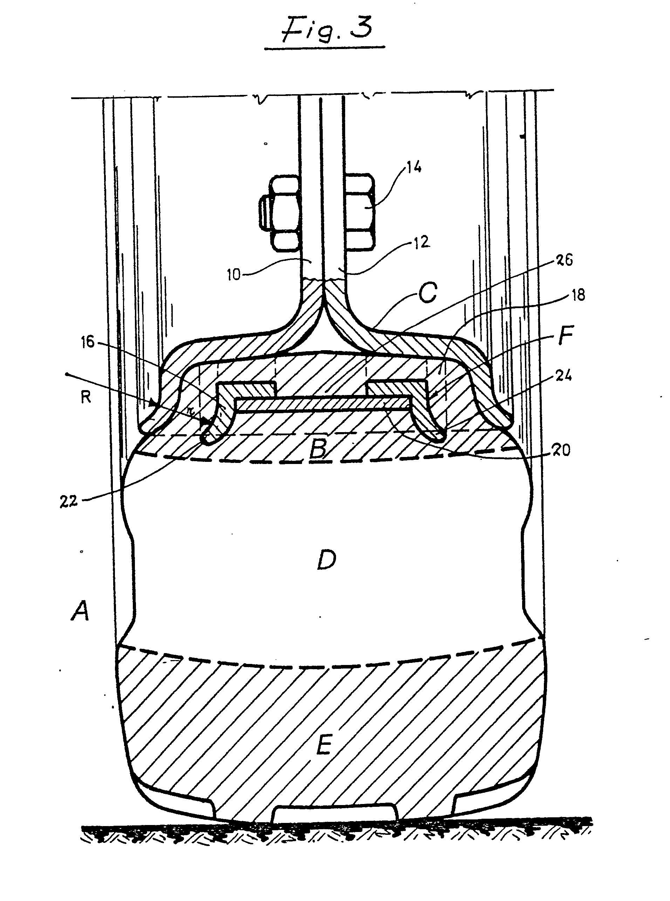

Referring now to the drawings and particularly to Fig. 3, there is shown a superelastic solid tire A, especially adapted to be mounted on industrial trucks, such as lifting trucks or the like, which presents a well known characteristic structure, formed of a inner layer or bead B, mounted on the rim C (which advantageously is a conventional rim for inflating tires, comprised of two portions 10—12, which can be secured to each other by means of fastening means 14, such as bolts), an intermediate layer D of a very elastic rubber so as to form a cushion and an outer layer E forming the tread of the solid tire A.

F designates the reinforcing inextensible metal ring, preferably of steel, extending along all the circular development of the tire bead B so that the latter is suitably stiffened in the direction of the axis of the wheel mounting the solid tire A in order to resist to axial compression stresses which are exerted on the solid tire A when it is mounted on the rim C.

As said, the outer layer E acting as a tread is formed of hard rubber having high physical and chemical characteristics, particularly as to the wear and abrasion reisistance; the intermediate layer D is formed at least partially of soft rubber and therefore of a high elastic hysteresis and the inner layer B is formed of hard rubber since it must have high mechanical characteristics as to stiffness and mechanical strength, because it is designed to form the bead of the solid tire A.

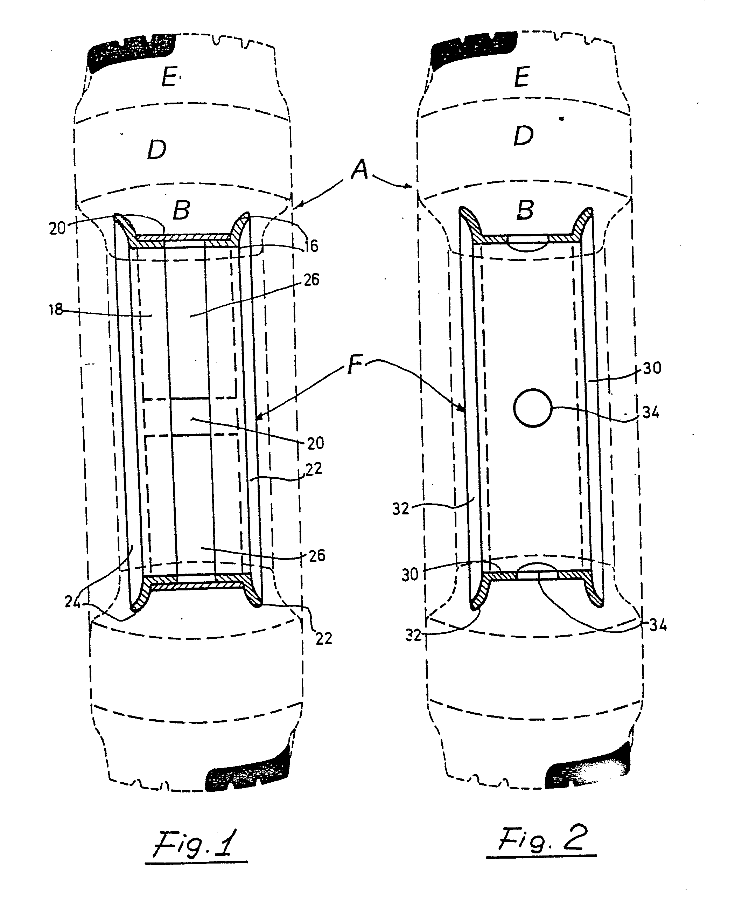

As already said, the superelastic solid tire A embodies the metal reinforcing ring F which, in accordance with Fig. 1, is formed of a pair of circular elements 16 and 18 firmly secured to each other by means of two or more spacers 20 in the form of a cross plate or a round iron or other means suitable for this purpose.

These circular elements 16 and 18 are provided on their circular outer edges with a radially projecting flange 22 and 24 having an outwardly arcuated shape. The bending radius r of this flange is preferably concentric with the radius R of the rim C edges enclosing therebetween the bead B of the solid tire A so as to closely follow its shape in order to have a uniform distribution of the stresses acting on the bead sides and therefore the compression of the bead portions enclosed between the rim C edges and the arcuated radially projecting flanges 22 and 24.

As it can be seen from Fig. 1, the reinforcing ring F has a greater diameter than that of the rim in order to increase the bearing surface thereon and it is provided with four plates 20 connecting the circular elements 16, 18, thereby forming four rectangular openings 26 which are intended to receive the bead rubber, since the ring F is applied to the solid tire A in a single curing operation, these openings 26 then acting as relief means towards the ring center of the stresses imposed to the solid tire during use.

In Fig. 2 there is shown the reinforcing ring F in another embodiment. In fact, instead of being formed of a pair of circular elements 16 and 18, it is formed here of one circular element 28 only having on its outer edges the arcuated radially projecting flanges 30 and 32, as in the embodiment according to Fig. 1.

The stress relief means are formed in this case of circular openings 34 provided along the center line of the circular element (in this example there are four openings) and intended to receive the rubber of the bead B during the application of the reinforcing ring F to the solid tire A in a single curing operation.

Therefore, the superelastic solid tire A together with the metal reinforcing ring F permits, in its preferred embodiments, the above mentioned main advantages to be obtained with respect to similar known tires, i.e. increased stability of the tire within the rim with resulting prevention of unduly restrictions due to dynamic and shear loads, improvement of load resistence in the inner portion of the superelastic solid tire both as to the attachment between rim amd solid tire and as to the greater laod supporting action, since the reinforcing ring has a greater diameter than that of the rim, and elimination of the effects which can cause the solid tire to slip on the wheel rim. As a further advantage it is to be said that the openings provided in the circular element or between the pair or circular elements forming the reinforcing ring F act as an interruption of the thermal bridges which would occur therein by the heating of the rubber forming the solid tire A during its use in the above mentioned vehicles, both for the environment working conditions and for the heavy duty, which these solid tires are generally designed to, since this heat would be dissipated within the wheel rim which contacts the rubber forming the tire bead rather than within the reinforcing ring.

**Claims**

1. Inextensible shaped ring (F) for reinforcing inserts of the bead of superelastic solid tires (A) or the like, mounted on a rim (C), said ring being formed of at least one circular element (28) provided on each of its outer edges with a radially projecting flange (30, 32), said inextensible ring (F) being characterized in that it is embodied in said bead (B) and in that said flange (30, 32) has an outwardly arcuated shape mating the rim shape on the sides in order to be anchored thereto by means of the superelastic solid tire (A) to avoid a possible slip between tire (A) and rim (C) during the use.

2. Inextensible shaped ring as claimed in claim 1, said ring being formed of a pair of circular elements (16, 18) characterized in that each of said circular elements (16, 18) is provided on its outer edge with a radially projecting flange (22, 24) reinforcing the tire bead sides, both said circular elements (16, 18) being firmly secured to each other by means of cross-spacers (20).

3. Inextensible shaped ring as claimed in claims 1 and 2, characterized in that said inextensible reinforcing ring (F) is provided with openings (26, 34) located along the center line thereof in order to relieve the stresses imposed on the tire (A) during the use in the center portion of the tire bead (B).

4. Inextensible shaped ring as claimed in claims 1 and 2, characterized in that the bending radius (r) of said radially projecting flanges (22, 24, 30, 32) of the reinforcing ring is concentric with that (R) of the rim edges in such a way as to follow the shape thereof in order to prevent rubber constrictions between rim and solid tire (A) due to the increase of the bearing surface on the rim (C).

5. Inextensible shaped ring as claimed in the preceding claims, characterized in that said openings (26, 34) provided in the circular element(s) (16, 18, 28) forming the reinforcing ring (F) act as interruptions of the thermal bridges occurring otherwise therein due to the tire heating resulting from the environmental and operational conditions.

6. Inextensible shaped ring as claimed in the preceding claims, characterized in that it is made of steel.

## Patentansprüche

1. Nicht dehnbarer Ring (F) zur Verstärkung der Wulst von Vollgummireifen (A) oder dgl., montiert auf eine Felge (C), wobei der Ring aus wenigstens einem kreisförmigen Element (28) gebildet ist, das an jeder seiner Außenkanten mit einem sich radial erstreckenden Flansch (30, 32) versehen ist, wobei der nicht dehnbare Ring F dadurch gekennzeichnet ist, daß er in die Wulst (B) eingebettet ist, und daß der Flansch (30, 32) eine nach außen gekrümmte Form hat, die der Felgenform beidseitig angepasst ist, um daran mittels des Vollgummireifens (A) verankert zu sein, damit ein eventueller Schlupf zwischen Reifen (A) und Felge (C) während des Gebrauchs vermieden wird.

2. Nicht dehnbarer Ring nach Anspruch 1, wobei der Ring aus einem Paar kreisförmiger Elemente (16, 18) gebildet ist, dadurch gekennzeichnet, daß jedes der kreisförmigen Elemente (16, 18) an seiner Außenkante mit einem radial vorstehenden Flansch (22, 24) zur Verstärkung der Reifenwulstseiten versehen ist, wobei die beiden kreisförmigen Elemente (16, 18) mittels Querabstandstücke (20) fest aneinander befestigt sind.

3. Nicht dehnbarer Ring nach Anspruch 1 und 2, dadurch gekennzeichnet, daß der nicht dehnbare Ring (F) mit auf seiner Mittellinie angeordneten Öffnungen (26, 34) versehen ist, um die auf den Reifen (A) während des Gebrauchs ausgeübte Beanspruchung im Mittenbereich der Reifenwulst (B) zu beseitigen.

4. Nicht dehnbarer Ring nach Anspruch 1 und 2, dadurch gekennzeichnet, daß der Krümmungsradius (r) der radial vorstehenden Flansche (22, 24, 30, 32) des Verstärkungsringes mit jenem (R) der Felgenkanten derart konzentrisch ist, daß es dessen Form folgt, um ein Zusammenpressen des Gummis zwischen Felge und Vollgummireifen (A) aufgrund der Tragflächenvergrößerung auf der Felge (C) zu verhindern.

5. Nicht dehnbarer ring nach den vorausgehenden Ansprüchen, dadurch gekennzeichnet, daß die in dem (den) kreisförmigen Element (Elementen) (16, 18, 28), das den Verstärkungsring (F) bildet, vorgesehenen Öffnungen (26, 34) als Unterbrechungen der andernfalls darin auftretenden Wärmebrücken aufgrund der durch die Umgebungs- und Arbeitsbedingungen verursachten Reifenerwärmung wirken.

6. Nicht dehnbarer Ring nach den vorausgehenden Asnprüchen, dadurch gekennzeichnet, daß er aus Stahl besteht.

## Revendications

1. Anneau inextensible (F) de renforcement des talons d' un pneumatique solide-élastique (A) ou analogue, monté sur une jante (C), cet anneau étant formé au moins d'un élément circulaire (28) prévu sur chacune de ses rebords extérieures avec une bride (30, 32) s'étendant radialement, cet anneau inextensible (F) étant caractérisé en ce qu'il est encorporé dans le talon (B) et en ce que ladite bride (30, 32) a une forme cambrée extérieurement qui s'épouse avec la forme de la jante sur les côtés de façon à être ancré à la même au moyen du pneu solide-élastique (A) pour éviter un possible glissement entre le pneu (A) et la jante (C) pendant l'usage.

2. Anneau inextensible selon la revendication 1, cet anneau étant formé d'une couple d'éléments circulaires (16, 18), caractérisé en ce que chacun desdits éléments circulaires (16, 18) est pourvu sur son rebord extérieure d'une bride (22,24) s'étendant radialement, que renforce les côtés du talon du pneu, les deux éléments circulaires (16, 18) étant réliés regidement l'un à l'autre au moyen d'entretoises transversaux (20).

3. Anneau inextensible selon les revendications 1 et 2, caractérisé en ce que l'anneau inextensible (F) de renforcement est pourvu d'ouvertures (26, 34) agencées le long de sa ligne médiane de façon à éliminer les contraintes exercées sur le pneu (A) dans la partie médiane du talon (B) du pneu.

4. Anneau inextensible selon les revendications 1 et 2, caractérisé en ce que le rayon de courbure (r) des brides (22, 24, 30, 32) s'étendant radialement de l'anneau de renforcement est concentrique avec celui (R) des rebords de la jante de telle manière à suivre sa forme pour empêcher des constrictions du caoutchouc entre le talon et le pneu solide (A) provoquées par l'augmentation de la surface d'appui de la jante (C).

5. Anneau inextensible selon les revendications précédentes, caractérisé en ce que les ouvertures (26, 34) prévues dans les éléments circulaires (16, 18, 28) formant l'anneau inextensible de renforcement (F) agissent comme des interruptions des ponts thermiques, qui, autrement, se présentent dans l'anneau dûs au chauffage du pneu dérivant des conditions d'ambiante et de fonctionnement.

6. Anneau inextensible selon les revendications précédentes, caractérise en ce qu'il est en acier.

*Fig.1*

*Fig.2*

Fig. 3